# EUROPEAN PATENT APPLICATION

(11) **EP 1 837 490 A1**
(43) Date of publication of application: **26.09.2007**
(21) Application number: 05816829.5
(22) Date of filing: 14.12.2005
(51) Int. Cl.: F01N 3/02, F01N 3/20, F01N 3/24, F01N 7/08, F01N 7/14, F02D 45/00, B01D 46/42

(54) **EXHAUST GAS PURIFICATION DEVICE AND CONTROL DEVICE FOR DIESEL ENGINE**

(30) Priority: 14.12.2004 JP 2004362049
(71) Applicant: Depro Corporation, Tokyo 105-0001 (JP)
(72) Inventor: SUDO, Manabu, 1570063 (JP); UEDA, Masayuki Springheights Room 205, Tokorozawa-shi, Saitama 3590021 (JP)
(74) Representative: Green, Mark Charles
(86) International application number: PCT/JP2005/022938
(87) International publication number: WO 2006/064835

(57) **Abstract**

The invention seeks to provide an exhaust gas purification device capable of preventing the temperature of a micro DPF from following sensitively in temperature change of an exhaust gas discharged from a diesel engine while maintaining the purification performance of the micro DPF in operating the engine and preventing deterioration of durability of the micro DPF due to heat or deformation. The exhaust gas purification device for the diesel engine comprises a micro DPF 32 for collecting and treating particulate matter in exhaust gas discharged from the diesel engine 10, a bypass passage 33 juxtaposed to the micro DPF 32, a heat insulating layer 37 disposed between the bypass passage 33 and the micro DPF 32 for restraining heat conduction between the exhaust gas flowing through the bypass passage 33 and the micro DPF 32, and a changeover valve 34 for allowing the exhaust gas to flow selectively into at least one of the micro DPF 32 and the bypass passage 33.

## Description

### [TECHNICAL FIELD]

This invention relates to an exhaust gas purification device for a diesel engine. Particularly, this invention relates to an exhaust gas purification device and control device for a diesel engine to decrease emissions of particulate matter (PM) consisting primarily of carbon.

### [BACKGROUND OF THE ART]

Reduction of exhaust gas containing harmful substances such as particulate matter (PM) and nitrogen oxide (NOx) is now major concerns to be solved. For that purpose, there has been developed an exhaust gas purification device such as a diesel particulate filter (DPF).

As one example of the exhaust gas purification device using DPF, there has been proposed an exhaust gas purification device for a diesel engine, which comprises a first continuous regeneration type DPF placed in an exhaust passage of the engine, a second continuous regeneration type DPF disposed on the upstream side of the exhaust passage, which is smaller in capacity than the first continuous regeneration type DPF, a bypass passage formed around the outer periphery of the second continuous regeneration type DPF, a control valve for opening and closing the bypass passage, and a control means for controlling the control valve so as to close the bypass passage when an exhaust gas from the engine is at a lower temperature range than a prescribed temperature (Patent Literature 1).

According to the aforementioned exhaust gas purification device, since the temperature of the exhaust gas is extremely low when continuing the state of a small amount of fuel consumption like in an idling state or decelerating state of the engine or a state of descending a long incline, the second DPF with a small capacity is rapidly cooled when passing the exhaust gas through the second DPF. Thus, the conventional device has trouble getting purification performance until rising the temperature of the second DPF even if the purification performance of the second DPF meets the required driving condition. Moreover, since the temperature of the second DPF follows sensitively the change in temperature of the exhaust gas, the conventional device has problems of being susceptible to heat strain and liable to deteriorate durability.

There has been proposed another emission treatment device for an engine provided with a main catalyst to treat harmful substances in such a matter that an exhaust gas is disposed by bringing exhaust steam into contact with an auxiliary catalyst mounted in a small exhaust passage under low flow rate conditions under the low load operation of the engine or bringing the whole exhaust gas into contact with the main catalyst while passing the exhaust gas through a main exhaust passage via a changeover valve under increased flow rate conditions under the high load operation of the engine (Patent Literature 2). To be specific, the changeover valve is disposed in the small exhaust passage or the main exhaust passage and operated so as to allow the exhaust gas to pass the small exhaust passage under low flow rate conditions under the low load operation of the engine. The changeover valve is switched so as to check the flow of the exhaust gas into the small exhaust passage and instead allow the whole exhaust gas to pass through the main exhaust passage with the main catalyst under high flow rate conditions under the high load operation of the engine.

Furthermore, since it is desirable in the cited reference (Patent Literature 2) to place the small exhaust passage in as close as possible to the engine to introduce the exhaust gas of high temperature into the engine, it is most preferable to connect the small exhaust passage directly with the exhaust port, but the small exhaust passage is practically placed as close as to the engine due to design constraint.

Although the exhaust treatment device of the aforementioned reference (Patent Literature 2) contributes to increase in temperature at which the exhaust gas passes through the auxiliary catalyst because the whole exhaust gas is introduced into the auxiliary catalyst placed near the engine under the high load operation of the engine, the temperature condition of the main catalyst, which must serve an important functional role, is aggravated due to lowering of temperature of the exhaust gas fed from the auxiliary catalyst to the main catalyst, as the result of which the main catalyst cannot disadvantageously fulfill its function. Further, the conventional device has another problem such that the small exhaust passage and the main exhaust passage are on-off switched to feeding the whole exhaust gas into either of the exhaust passages, to cause marked reduction in temperature of the exhaust gas due to lowering of the ambient temperature by suspension of the flow of the exhaust gas into the auxiliary catalyst when the engine operates at a high load, consequently to impede the functioning of the catalyst due to lagging of the temperature raise at the start of using the auxiliary catalyst. On top of the aforementioned problems, the conventional device is difficult to be appropriately designed to satisfy comprehensively both the main catalyst and auxiliary catalyst.

[Patent Literature 1] Japanese Patent Application Publication No. 2003-3830A
[Patent Literature 2] Japanese Patent Application Publication No. 2002-322909A

### [DISCLOSURE OF THE INVENTION]

### [PROBLEMS TO BE SOLVED BY THE INVENTION]

The present invention was made in view of the aforementioned problems and requirements and seeks to provide an exhaust gas purification device capable of preventing the temperature of a micro DPF from following sensitively in temperature change of an exhaust gas discharged from a diesel engine while maintaining the purification performance of the micro DPF in operating the engine and preventing deterioration of durability of the micro DPF due to heat or deformation. The present invention further seeks to provide an exhaust gas purification device capable of suppressing reduction in temperature when introducing the exhaust gas from the micro DPF into a main DPF to allow the main DPF to fulfill its function properly. The present invention also seeks to provide an exhaust gas purification device for a diesel engine, which jointly allows the main DPF and micro DPF to fulfill their functions of optimally purifying the exhaust gas.

### [MEANS OF SOLVING THE PROBLEMS]

To attain the objects as described above according to the present invention, there is provided an exhaust gas purification device for a diesel engine, which comprises a micro DPF for collecting and treating particulate matter in exhaust gas discharged from the diesel engine, a bypass passage juxtaposed to the micro DPF, a heat insulating layer disposed between the bypass passage and the micro DPF for restraining heat conduction between the exhaust gas flowing through the bypass passage and the micro DPF, and a changeover valve for allowing the exhaust gas to flow selectively into at least one of the micro DPF and the bypass passage.

According to the device described above, since the heat conduction between the exhaust gas flowing through the bypass passage and the micro DPF can be restrained, the temperature of the micro DPF is prevented from following the temperature change of the exhaust gas flowing through the bypass passage.

The exhaust gas purification device for a diesel engine of the invention as described above is further featured by integrating the micro DPF, bypass passage and changeover valve into one by a housing.

According to the device described above, since the micro DPF, bypass passage and changeover valve are united in the housing, consequently to decrease the surface area of the entire micro DPF unit, the heat conduction between the micro DPF unit and ambient air can be restrained. Besides, the integrated micro DPF unit can be reduced in size and production cost and is easy to maintain and mount.

The exhaust gas purification device for a diesel engine of the invention as described above is further featured in that an exhaust pipe connecting the micro DPF with the diesel engine is covered with heat insulation material.

According to the device described above, since the exhaust pipe connecting the micro DPF with the diesel engine is made of heat insulation material, the exhaust gas can be restrained from cooling down to keep the temperature of the exhaust gas at the inlet port of micro-FPD high.

The exhaust gas purification device for a diesel engine of the invention as described above is further featured by placing the main DPF on the downstream side of the micro DPF.

According to the device described above, since the main DPF is placed on the downstream side of the micro DPF, the PM in the exhaust gas discharged from the diesel engine can be securely collected and disposed. Moreover, combustion heat is produced during oxidation treatment for PM in a part of the exhaust gas, thereby to increase the temperature of the micro DPF, so that the temperature of the exhaust gas after passing through the micro DPF 32 can be maintained at the temperature for oxidation treatment of the PM in the main DPF.

The exhaust gas purification device for a diesel engine of the invention as described above is further featured by placing the micro DPF closer to the main DPF than the diesel engine.

According to the aforementioned device in which the micro DPF is placed at a distant from the diesel engine, the temperature of a micro DPF can be restrained from following sensitively the temperature of the diesel engine and the exhaust gas discharged from the diesel engine. The exhaust gas can be as well restrained from cooling down to keep the temperature of the exhaust gas at the inlet port of micro-FPD high.

The exhaust gas purification device for a diesel engine of the invention as described above is further featured by arranging the micro DPF so as to place the central axis of the exhaust outlet port of the micro DPF in the same line with the central axis of a flow passage of the main DPF.

According to the aforementioned device in which the flow passage for the exhaust gas from the micro DPF to the main DPF is near to a straight line, flow resistance of the exhaust gas becomes low, so that deterioration of the performance of the engine can be moderated.

In any of the aforementioned exhaust gas purification devices for a diesel engine according to the invention, the device is featured by further comprising a memory means for storing opening data used for controlling opening of the changeover valve according to an depressing amount of an accelerator pedal and a rotation number of the engine, which changeover valve control means detects the depressing amount of the accelerator pedal and is controlled to allow the entire exhaust gas or large amount of exhaust gas to pass through the bypass passage when the depressing amount of the accelerator pedal is less than a first threshold value prescribed on the basis of the aforesaid opening data.

According to the aforementioned device in which the changeover valve is controlled to allow the entire exhaust gas or large amount of exhaust gas to pass through the bypass passage when the depressing amount of the accelerator pedal is small, the micro DPF can be prevented from cooling when the temperature of the exhaust gas is extremely low.

Further, the aforementioned exhaust gas purification device for a diesel engine according to the invention is featured in that the changeover valve control means detects the depressing amount of the accelerator pedal and is controlled to allow the entire exhaust gas or large amount of exhaust gas to pass through the micro DPF when the depressing amount of the accelerator pedal is more than a first threshold and less than a second threshold value, which threshold values are prescribed on the basis of the aforesaid opening data, and the rotation number of the engine prescribed on the basis of the aforesaid opening data is more than the first threshold value and less than the second threshold value.

According to the aforementioned device, the entire exhaust gas or large amount of exhaust gas can be fed into the micro DPF, so that the PM in the exhaust gas can be subjected to continuous oxidation treatment in the micro DPF. Also, the exhaust gas passing through the micro DPF is maintained in temperature by combustion heat produced during the oxidation treatment of the PM in a part of the exhaust gas, so that the oxidation treatment can be as well carried out in the micro DPF.

Further, the aforementioned exhaust gas purification device for a diesel engine according to the invention is featured in that the changeover valve control means detects the depressing amount of the accelerator pedal and the rotation number of the engine and is controlled to allow the large amount of exhaust gas to pass through the bypass passage when the rotation number of the engine is more than the second threshold value prescribed on the basis of the aforesaid depressing amount of the accelerator pedal or the depressing amount of the accelerator pedal is more than the second threshold value prescribed on the basis of the aforesaid depressing amount of the accelerator pedal.

According to the aforementioned device, since the changeover value is controlled to allow the large amount of exhaust gas to pass through the bypass passage when the exhaust gas becomes high in temperature by increasing the rotation number of the engine or the depressing amount of the accelerator pedal, the temperature of the micro DPF can be maintained even in treating the large amount of exhaust gas passing through the bypass passage.

Moreover, the aforementioned exhaust gas purification device for a diesel engine according to the invention is featured by further comprising an exhaust temperature sensor for measuring the temperature of the exhaust gas fed into the micro DPF or main DPF, so that the changeover valve control means outputs information for controlling the changeover valve on the basis of the temperature of the exhaust gas detected by the exhaust temperature sensor.

According to the aforementioned device having the exhaust temperature sensor for measuring the temperature of the exhaust gas fed into the micro DPF or main DPF and the changeover valve control means for outputting the information for controlling the changeover valve on the basis of the temperature of the exhaust gas detected by the exhaust temperature sensor, the exhaust gas can be controlled at a temperature adaptable enough for continuous regeneration of the PM even when undergoing changes in environment.

Further, the control device according to the invention comprises a main DPF for collecting and treating particulate matter in an exhaust gas discharged from a diesel engine, a micro DPF disposed on the upperstream side of the main DPF, a bypass passage juxtaposed to the micro DPF, a changeover valve for allowing the exhaust gas to flow selectively into at least one of the micro DPF and the bypass passage, a memory means for storing opening data used for controlling opening of the changeover valve according to an depressing amount of an accelerator pedal and a rotation number of the engine, and a changeover valve control means detects the depressing amount of the accelerator pedal and is controlled to allow the entire amount or large amount of exhaust gas to pass through a bypass passage when the depressing amount of the accelerator pedal is less than a first threshold value prescribed on the basis of the aforesaid opening data.

According to the aforementioned control device, since the changeover valve is controlled so as to allow the entire amount or large amount of the exhaust gas to flow into the bypass passage when the depressing amount of the accelerator pedal is small, the micro DPF can be prevented from cooling when the temperature of the exhaust gas is extremely low.

Further, the aforementioned control device according to the invention is featured in that the changeover valve control means detects the depressing amount of the accelerator pedal and rotation number of the engine and is controlled to allow the entire amount or large amount of exhaust gas to pass through the micro DPF when the depressing amount of the accelerator pedal is more than a first threshold and less than a second threshold value, which threshold values are prescribed on the basis of the aforesaid opening data, and the rotation number of the engine prescribed on the basis of the aforesaid opening data is more than the first threshold value and less than the second threshold value.

According to the aforementioned control device, the entire amount or large amount of exhaust gas can be fed into the micro DPF, so that the PM in the exhaust gas can be subjected to continuous oxidation treatment in the micro DPF. Also, the exhaust gas passing through the micro DPF is maintained in temperature by combustion heat produced during the oxidation treatment of the PM in a part of the exhaust gas, so that the oxidation treatment can be as well carried out in the micro DPF.

Further, the aforementioned control device according to the invention is featured in that the changeover valve control means detects the depressing amount of the accelerator pedal and the rotation number of the engine and is controlled to allow the large amount of exhaust gas to pass through the bypass passage when the rotation number of the engine is more than the second threshold value prescribed on the basis of the aforesaid opening data or the depressing amount of the accelerator pedal is more than the second threshold value prescribed on the basis of the aforesaid opening data.

According to the aforementioned control device, since the changeover value is controlled to allow the large amount of exhaust gas to pass through the bypass passage when the exhaust gas becomes high in temperature by increasing the rotation number of the engine or the depressing amount of the accelerator pedal, the temperature of the micro DPF can be maintained even in treating the large amount of exhaust gas passing through the bypass passage.

### [EFFECT OF THE INVENTION]

According to the exhaust gas purification device of the present invention, the purification performance of the micro DPF can be maintained when operating the engine while preventing the temperature of the micro DPF from following the temperature change of the exhaust gas, and deterioration of durability of the micro DPF due to heat or deformation can be prevented.

### [BRIEF DESCRIPTION OF THE DRAWINGS]

[FIG. 1] Perspective view showing the entire exhaust gas purification device for a diesel engine of Embodiment (1) according to the invention.
[FIG. 2] Diagram showing the entire exhaust gas purification device of Embodiment (1) according to the invention.
[FIG. 3] Perspective view showing the exhaust gas purification device of Embodiment (1) according to the invention.
[FIG. 4] Cross section taken along A-A in FIG 3.
[FIG. 5] Cross section taken along B-B in FIG 4.
[FIG. 6] Side view showing the exhaust gas purification device of Embodiment (1) according to the invention.
[FIG. 7] Graph showing data on the angle of a changeover valve used in the exhaust gas purification device of Embodiment (1) according to the invention.
[FIG. 8] Longitudinal cross section of a micro DPF unit of Embodiment (2) according to the invention.
[FIG. 9] Side view showing the exhaust gas purification device of Embodiment (2) according to the invention.
[FIG. 10] Graph showing data on the angle of the changeover valve used in the exhaust gas purification device of Embodiment (2) according to the invention.
[FIG. 11] Longitudinal cross section of a micro DPF unit of Embodiment (3) according to the invention.
[FIG. 12] Side view showing the exhaust gas purification device of Embodiment (3) according to the invention.
[FIG. 13] Side view showing a modified exhaust gas purification device of Embodiment (3) according to the invention.
[FIG. 14] Graph showing data on the angle of the changeover valve used in the exhaust gas purification device of Embodiment (3) according to the invention.
[FIG. 15] Transverse cross section showing the exhaust gas purification device of Embodiment (4) according to the invention.

### [EXPLANATION OF REFERENCE NUMERALS]

- 10: Diesel Engine
- 11: Exhaust Pipe
- 11A: Upperstream Exhaust Pipe
- 11B: Downstream Exhaust Pipe
- 12: Intake Manifold
- 14: Exhaust Manifold
- 16: Accelerator Pedal Position Sensor
- 18: Rotation Sensor
- 20: Control Device
- 22: Intake Temperature Sensor
- 24: Intake Throttle
- 26: Exhaust Throttle
- 27: External EGR Pipe
- 28: Exhaust Temperature Sensor
- 29: Exhaust Temperature Sensor
- 30: Micro DPF Unit
- 31: Housing
- 32: Micro DPF
- 33: Bypass Passage
- 34: Changeover Valve
- 35: Exhaust Inlet Port
- 36: Exhaust Outlet Port
- 37: Heat Insulating Layer
- 38A and 38B: Casing
- 39: Separator
- 40: Casing
- 41: Tilting Shaft
- 42: Mount Plate
- 43: Air Cylinder
- 44: Connector
- 45: Lever Link
- 46: Stopper
- 47: Fixing Plate
- 48: Shaft
- 49: Stopper
- 50: Spring
- 51: Fixing Nut
- 52: Spring
- 53: Fixture
- 60: Main DPF
- a1 and b1: First Threshold Value
- a2 and b2: Second Threshold Value

### [BEST MODE FOR CARRYING OUT THE INVENTION]

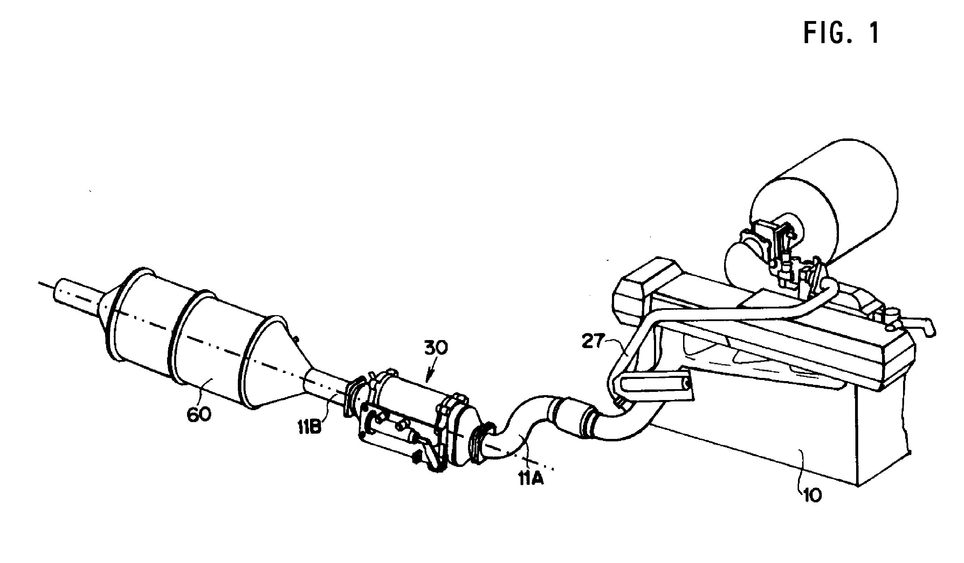

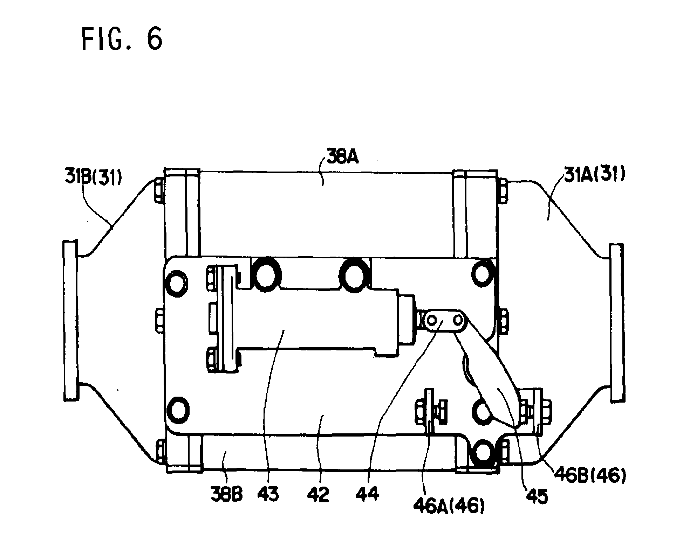

The best mode for carrying out the present invention will be described hereinafter in detail. FIG 1 through FIG 7 are diagrams showing the exhaust gas purification device for a diesel engine of the first Embodiment (1) according to the invention.

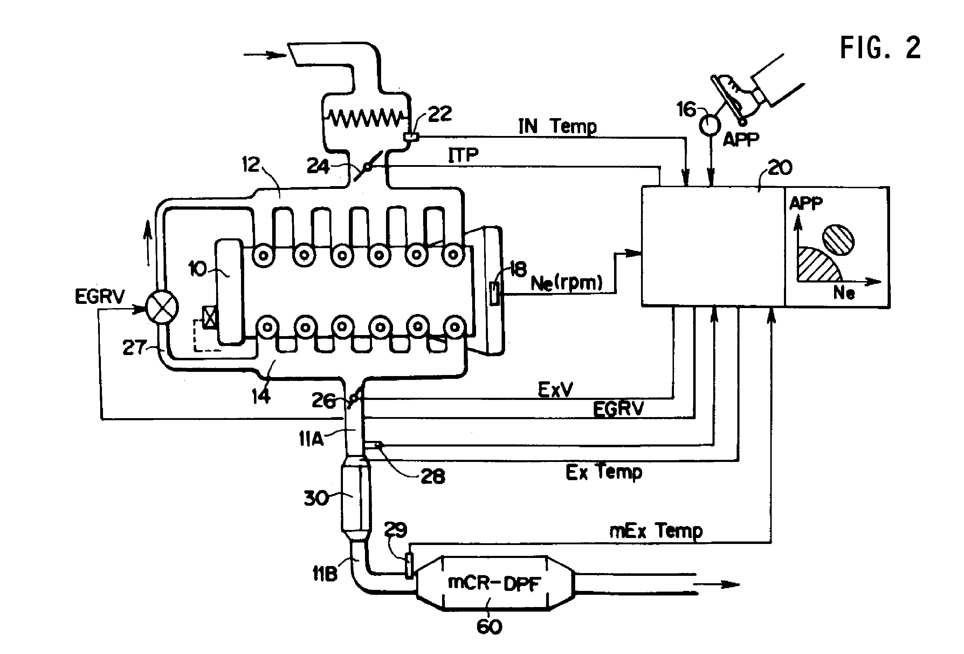

As shown in FIG 1 and FIG 2, the exhaust gas purification device of the invention includes a diesel engine 10 that emits an exhaust gas to be purified here, a micro DPF unit 30 connected to the diesel engine 10 through an exhaust pipe 11A, and a main DPF 60 connected to the micro DPF unit 30 through an exhaust pipe 11B.

The diesel engine 10 has an intake manifold 12 for introducing fresh air into cylinders in the diesel engine 10, and exhaust manifold 12 for passing the exhaust gas discharged from the cylinders of the engine after burning. To the exhaust manifold 12, an upperstream exhaust pipe 11A is connected so as to discharge the exhaust gas to the micro DPF unit 30 through the upperstream exhaust pipe 11A. The upperstream exhaust pipe 11A is coated with insulating material so as to preventing the exhaust gas discharged from the diesel engine from cooling.

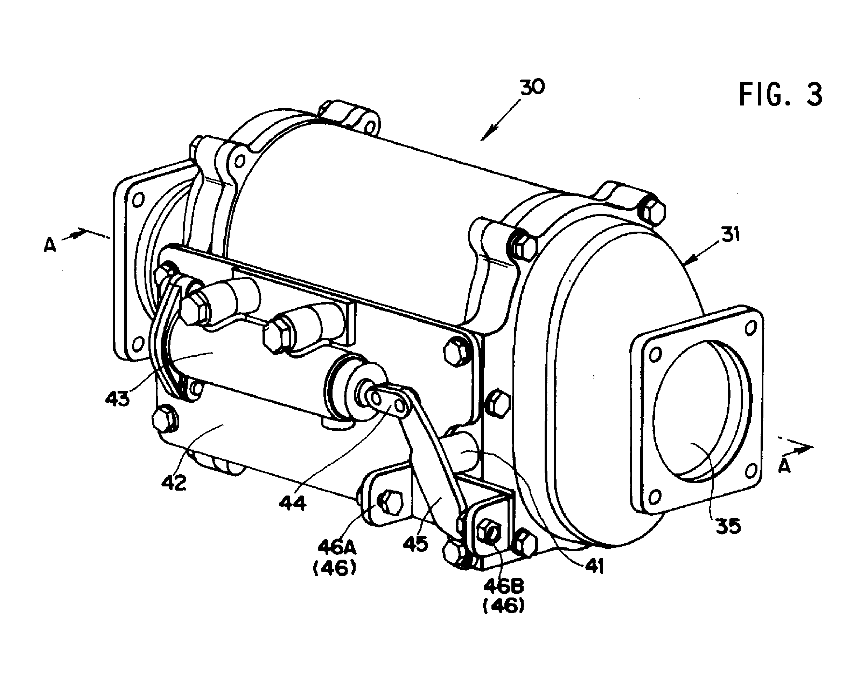

As shown in FIGS. 3 through 5, the micro DPF unit 30 includes a cylindrical micro DPF 32, a bypass passage 33 having a substantially semicircular section and juxtaposed to the micro DPF 32, a heat insulating layer 37 formed between the micro DPF 32 and the bypass passage 33, and a changeover valve 34 for allowing the exhaust gas to flow selectively into at least one of the micro DPF 32 and the bypass passage 33. The micro DPF 32 and the bypass passage 33 are integrally secured to a housing 31A having an exhaust inlet port and a housing 31B having an exhaust outlet port. The changeover valve 34 is attached to the housing 31A through a tilting shaft 41.

The micro DPF 32 is a small-size CR-DPF capable of transforming CO, HC and NO contained in a relatively small amount of exhaust gas discharged under the low load operation of the diesel engine to CO₂, H₂O and NO₂ by oxidization and subjecting a part of PM to continuous oxidation treatment. Onto the outer periphery of the micro DPF, there is attached a casing 38A for protecting the micro DPF 32. The casing 38A may be made of metal, resin or other suitable material, but commonly of heat-resisting metallic material.

The micro DPF 32 is composed by incorporating, in one container, oxidation catalyst for transforming CO, HC and NO contained in the exhaust gas discharged from the diesel engine into CO₂ H₂O and NO₂ and a DPF (diesel particulate filter) for collecting and treating PM (particulate matter) contained in the exhaust gas. However, only the DPF may be used alone. The dimensions (size) of the micro DPF 32 may be determined in accordance with the temperature characteristics of the diesel engine and flow rate of the exhaust gas at the design phase.

The bypass passage 33 is juxtaposed to the micro DPF 32 through the heat insulating layer 37 through which the exhaust gas is discharged from the exhaust outlet port to the downstream exhaust pipe 11A. The bypass passage 33 is formed with a casing 38B having a substantially semicircular section.

The heat insulating layer 37 is formed of an air layer between the micro DPF 32 and the bypass passage 33. Although the air layer in this embodiment serves to sufficiently restrain heat conduction between the exhaust gas flowing through the bypass passage 33 and the micro DPF 32, a suitable heat insulating material or the like may be used alternatively to more restrain the heat conduction.

The changeover valve 34 is capable of tilting about a tilting shaft 41 to vary the opening of the valve and functions to switch the flow passage to either the micro DPF 32 or the bypass passage 33 in accordance with the order of the control device 20.

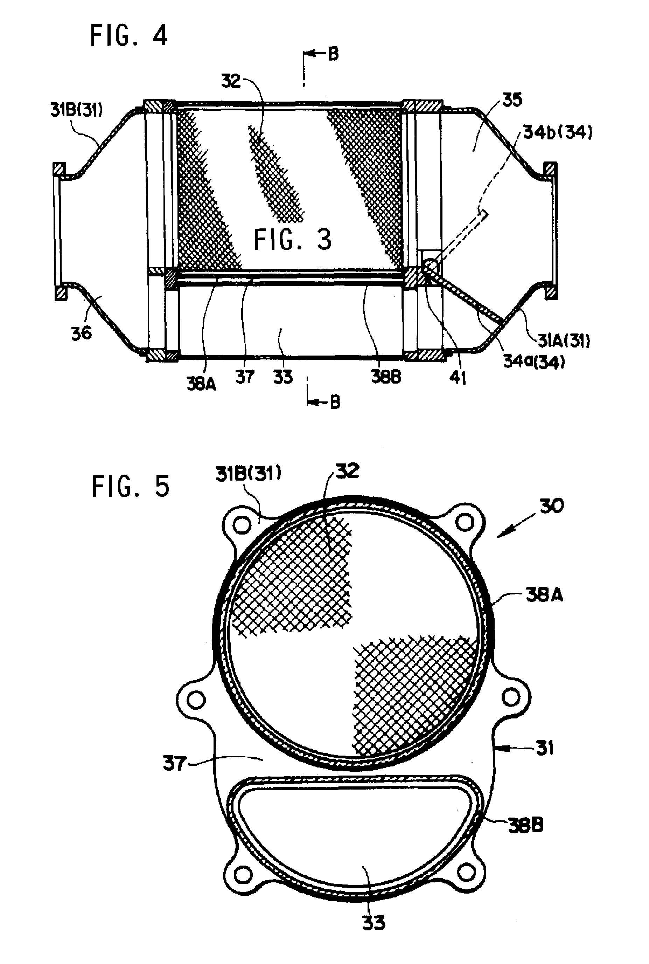

When the changeover valve 34 assumes the position 34a in FIG 4, the bypass passage 33 is fully closed by the changeover valve 34. In this state, the entire exhaust gas is fed into the micro DPF, to transform CO, HC and NO contained in the exhaust gas to CO₂, H₂O and NO₂ and subject the PM in the exhaust gas to continuous oxidation treatment. Then, the exhaust gas passing through the micro DPF 32 is fed into the downstream exhaust pipe 11B through the exhaust outlet port 36.

When the changeover valve 34 assumes the position 34b in FIG 4, the bypass passage 33 is open, and a passage for allowing a part of the exhaust gas to flow into the micro DPF 32 is formed as well. In this state, a gas-passing resistance for restricting flow of the exhaust gas in the micro DPF 32 is larger than that in the bypass passage 33, thus to allow a large amount of exhaust gas to pass through the bypass passage 33. At a time, a part of the exhaust gas also flows into the micro DPF 32 to transform CO, HC and NO contained in the exhaust gas to CO₂, H₂O and NO₂ and subject a part of the PM in the exhaust gas to continuous oxidation treatment. The exhaust gas passing through the micro DPF 32 and the bypass passage 33 is fed into the downstream exhaust pipe 11B through the exhaust outlet port 36. It is desirable to determine the position 34b of the changeover valve 34 to a position at which 70 to 98 vol%, more preferably 85 to 90 vol%, of the entire exhaust gas flows through the bypass passage.

The changeover valve 34 is operated with an air cylinder 43 mounted on the side of the housing 31 through a mount plate 42. To the tilting shaft 41 for tilting the changeover valve 34, a lever link 45 is attached so as to turn along with the changeover valve. The lever line 45 is rotatably connected to a piston of the air cylinder 43. Thus, the changeover valve 34 is operated to tilt by expansion and constriction of the air cylinder 43 connected to the lever line 45 and tilting shaft 41.

The tilting of the lever link 45 is restricted so as not to tilt beyond necessity by means of a stopper 46A and a stopper 46B disposed on the mount plate 42. For instance, the changeover valve 34 assumes the position 34A when the lever link 45 is at the stopper 46A as the result of the expansion of the piston of the air cylinder 43, thus to close the bypass passage 33. Meanwhile, the changeover valve 34 assumes the position 34B when the lever link 45 is at the stopper 46B as the result of the constriction of the piston of the air cylinder 43, thus to open the bypass passage 33 and allow small quantity of the exhaust gas to flow into the micro DPF 32. Thus, by adjusting the position of the stopper 46B, the stop position of the changeover valve 34 can be controlled.

The exhaust gas sent into the micro DPF 30 is controlled at the exhaust inlet port 35 by the changeover valve 43 to flow through at least one of the micro DPF 32 and bypass passage 33. Then, the exhaust gas passing through at least one of the micro DPF 32 and bypass passage 33 flows into the exhaust outlet port 36.

The control device 20 for controlling the opening of the changeover valve 34 comprises an accelerator pedal position sensor 16 for detecting the depressing amount of an accelerator pedal (load) for getting a driver to input information for controlling an output of the diesel engine, and a rotation sensor 20 for measuring a rotating angle or other information of a crank shaft of the diesel engine to output a rotating angle signal (including the rotating speed signal of the engine) to the control device 20. The depressing amount of the acceleration pedal is transmitted to a not-illustrated fuel injection device to control injection quantity of fuel to be supplied to the engine.

The main DPF 60 is attached to the downstream exhaust pipe 11B to allow the exhaust gas passing through the micro DPF unit 30 to flow thereinto. The main DPF 60 is a large-size CR-DPF capable of transforming CO, HC and NO contained in a large amount of exhaust gas discharged under the high load operation of the diesel engine to CO₂, H₂O and NO₂ by oxidization and subjecting the PM to continuous oxidation treatment.

The micro DPF unit 30 should not be disposed immediately beneath the diesel engine 10 to restrain conduction of heat from the diesel engine 10. That is, it is preferable to place the micro DPF unit closer to the main DPF than the diesel engine. To be more specific, the downstream exhaust pipe 11B is shorter than the upperstream exhaust pipe 11A. Moreover, the micro DPF unit 30 is arranged in such a manner that the central axis of the exhaust outlet port 36 of the micro DPF unit 30 is placed in the same line with the central axis of a exhaust pipe 11B connecting the main DPF 60 with the micro DPF unit 30. Thus, the flow passage for the exhaust gas from the micro DPF unit 30 to the main DPF 60 is near to a straight line, flow resistance of the exhaust gas becomes low, so that deterioration of the performance of the engine can be moderated.

In addition to the aforementioned DPFs, the exhaust gas purification device for the diesel engine is provided with an intake temperature sensor 22 for measuring the intake-air temperature of the engine, an intake throttle for regulating the quantity of fresh air to be introduced into the cylinder of the engine by restricting admission of the air, and an exhaust throttle 26 for controlling the exhaust gas to return to the engine by restricting emission of the engine. The exhaust throttle 26 may be placed on the downstream side of the micro DPF unit 30 or on the upperstream or downstream side of the main DPF 60.

Furthermore, the exhaust gas purification device for the diesel engine has an external EGR pipe 27 for allowing the exhaust gas discharged through the exhaust manifold 14 or other parts to flow back to the intake manifold 12, so that the amount of the exhaust gas to be recirculated can be regulated by controlling an external EGR valve.

The exhaust gas purification device for the diesel engine further has an exhaust temperature sensor 28 for measuring the temperature of the exhaust gas flowing into the micro DPF unit 30, and another exhaust temperature sensor 29 for measuring the temperature of the exhaust gas flowing into the main DPF 60.

The capacity (size) of the main DPF 60, the length of the exhaust pipe 11 leading to each DPF, and the mounting position of the changeover valve 34 may be arbitrarily determined on the basis of the type of a target vehicle or the structure of the engine.

In the exhaust gas purification device for the diesel engine in Embodiment (1) of the invention as described above, since the micro DPF 32 is spaced apart from the bypass passage 33 through the heat insulating layer 37, heat conduction between the exhaust gas flowing through the bypass passage 33 and the micro DPF 32 can be restrained in accordance with the temperature change of the exhaust gas passing through the bypass passage 33. Besides, heat conduction between the micro DPF 32 and bypass passage 33 and the outside can also be restrained to prevent the exhaust gas passing through the micro DPF 32 and bypass passage 33 from cooling by the outside air under the low load operation of the engine emitting the exhaust gas of low temperature. Furthermore, the possible harmful effect of the exhaust gas on peripheral devices can be eliminated under the high load operation of the engine emitting the exhaust gas of high temperature.

Besides, since the micro DPF 32, bypass passage 33 and changeover valve 34 are integrated in one in the housing 31, the surface area of the entire micro DPF unit 30 can be decreased, so that the exhaust gas passing through the micro DPF 32 and bypass passage 33 can be prevented from cooling by the outside air under the low load operation of the engine emitting the exhaust gas of low temperature. Furthermore, the possible harmful effect of the heated micro DPF unit 30 on peripheral devices can be eliminated under the high load operation of the engine emitting the exhaust gas of high temperature. Besides, the integrated micro DPF unit can be reduced in size and production cost and is easy to maintain and mount.

The micro DPF unit 30 has large heat capacity due to the long upperstream exhaust pipe 11A extending from the diesel engine 10 to the micro DPF unit, so that the temperature of a micro DPF unit 30 can be restrained from following sensitively the temperature of the diesel engine 10 and the exhaust gas discharged from the diesel engine 10. Furthermore, since the upperstream exhaust pipe 11A is coated with heat insulation material, the exhaust gas can be prevented from cooling.

Moreover, since the length of the downstream exhaust pipe 11B from the micro DPF unit 30 to the main DPF 60 is short, cooling of the exhaust gas in the downstream exhaust pipe 11B can be moderated to maintain the exhaust gas at the inlet port of the main DPF 60 at a high temperature.

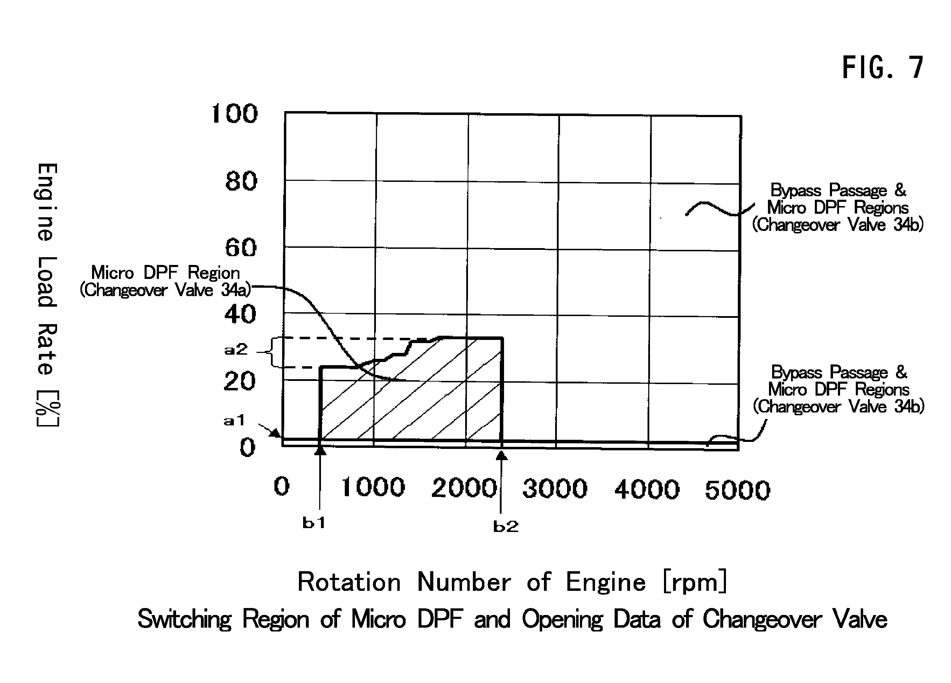

Next, controlling of the exhaust gas purification device for the diesel engine of the invention will be described hereinafter. FIG 7 is a graph showing opening data on the depressing amount of the accelerator pedal (engine load rate) corresponding to the opening of the changeover valve 34 used in the exhaust gas purification device shown in FIG 4 according to the number of rotations of the engine.

The opening data shown in the drawing are stored in a memory provided in the control device 20. The control device 20 has a changeover valve control means for producing control information for controlling the changeover valve 34 on the basis of the depressing amount (%) of the accelerator pedal (engine load rate (%)) detected by the accelerator pedal position sensor16 and the rotation number (rpm) of the engine detected by the rotation sensor 18, referring to the opening data of the changeover valve 34 stored in the aforementioned memory. The memory for storing the opening data may be incorporated inside the control device 20 or independently outside the control device so as to be allowed to communicate to the control device 20.

As seen from the opening data shown in FIG 7, when the depressing amount of the accelerator pedal is less than a predetermined first threshold value a1, the changeover valve control means in the control device 20 issues a control signal to the changeover valve 34 to tilt the changeover valve 34 to the position 34b. Consequently, the bypass passage 33 is open to introduce a large amount of exhaust gas into the bypass passage 33 and a part of exhaust gas into the micro DPF.

When the depressing amount of the accelerator pedal is more than a first threshold a1 and less than a second threshold value a2 and the rotation number of the engine is more than a first threshold value b1 and less than a second threshold value b2, the changeover valve control means in the control device 20 outputs a control signal to the changeover valve 34 to tilt the changeover valve to the position 34a. Consequently, the bypass passage 33 is closed to allow the entire exhaust gas to flow into the micro DPF 32. The first threshold value a1 and the second threshold value a2 predetermined for the depressing amount of the accelerator pedal have the relation of (second threshold value a2 ≧ first threshold value a1). Likewise, the first threshold value a1 and the second threshold value a2 predetermined for the rotation number of the engine have the relation of (second threshold value b2 ≧ first threshold value b1). The second threshold value a2 predetermined for the depressing amount of the accelerator pedal varies with the rotation number of the engine, so that the second threshold value a2 increases as the rotation number of the engine increases, as shown in FIG 7.

Meanwhile, when the depressing amount of the accelerator pedal is larger than a prescribed second threshold value a2 or the rotation number of the engine is larger than a prescribed second threshold value b2, the changeover valve control means in the control device 20 issues a control signal to the changeover valve 34 to tilt the changeover valve 34 to the position 34b. Consequently, the bypass passage 33 is open to introduce a large amount of exhaust gas into the bypass passage 33 and a part of exhaust gas into the micro DPF.

To be more specific, in operating condition at a middle rotation speed of 1500 rpm and middle load with 60% depressing amount of the accelerator pedal as one example, the depressing amount of the accelerator pedal becomes larger than the second threshold value a2, as illustrated in FIG 7. In the operating condition at the middle rotation speed and middle load, the temperature of the exhaust gas is increased to be sufficiently purified in the main DPF 60. Thus, the changeover valve control means in the control device 20 issues a control signal to the changeover valve 34 to tilt the changeover valve 34 to the position 34b, so that the bypass passage 33 is open to allow the exhaust gas to flow directly into the main DPF 60.

At this conjuncture, the flow resistance of the exhaust gas in the micro DPF 32 is larger than that in the bypass passage 33, so a large amount of the exhaust gas passes through the bypass passage 33, and the PM in the exhaust gas flowing into the main DPF 60 is subjected to continuous oxidation treatment in the micro DPF. A part of the exhaust gas flows into the micro DPF 32, and the PM is likewise subjected to continuous oxidation treatment. Thus, by allowing a small amount of the exhaust gas to flow continuously into the micro DPF 32 in using the main DPF 60, the micro DPF 32 can be maintained at a prescribed temperature. Therefore, if the flow of the exhaust gas changes into the micro DPF 32 due to decrease in load in an operation condition, the PM in the exhaust gas can be subjected to continuous oxidation treatment just after changing the flow, so that the PM can be continuously regenerated even when the operation condition changes abruptly.

Subsequently, when the accelerator pedal is further returned by about 20% of the depressing amount while operating the engine at a rotation number of 1500 rpm, the depressing amount of the accelerator pedal becomes more than the first threshold value a1 and less than the second threshold value a2 and the rotation number of the engine becomes more than the first threshold value b1 and less than the second threshold value b2. In this state, the changeover valve control means issues a control signal to the changeover valve 34, so that the bypass passage 33 is closed by tilting the valve 34 to the position 34a thus to allow the entire exhaust gas to flow into the micro DPF 32 while referring to the opening data of the changeover valve.

The operating conditions of the aforementioned rotation number of the engine and the depressing amount of the accelerator pedal work out at a constant speed. Under these conditions, the entire exhaust gas flows into the micro DPF 32 to subject a part of PM in the exhaust gas to continuous oxidation treatment. Since the passage of the exhaust gas is switched to the micro DPF 32 by closing the bypass passage 33 with the changeover valve 34, the flow resistance of the exhaust gas is increased to make the pressure of the exhaust gas higher that in the exhaust gas flowing through the bypass passage 33. Thus, the exhaust gas flowing back to the diesel engine 10 is increased in quantity to increase the temperature of the exhaust gas, so that the exhaust gas flowing into the micro DPF 32 becomes a temperature capable of continuously regenerating the PM. Furthermore, since combustion heat is produced during oxidation treatment for PM in a part of the exhaust gas, the temperature of the micro DPF can be increased so as to maintain the temperature of the exhaust gas after passing through the micro DPF 32 at the temperature for oxidation treatment of the PM in the main DPF. At this time, the opening size of the exhaust throttle may be controlled according to the depressing amount of the accelerator pedal or the rotation number of the engine. In such a case, the opening size of the exhaust throttle may be stored in the memory means so as to close the exhaust throttle 26 when the rotation number of the engine is less than the prescribed rotation number and the depressing amount of the accelerator pedal is less than the prescribed depressing amount, so that information for controlling the exhaust throttle 26 is outputted from the changeover valve control means in the control device 20, referring to the depressing amount of the accelerator pedal and the rotation number of the engine.

Therefore, in an operating range of low-load and low-speed rotation in an idling state in which the exhaust gas does not reach the prescribed temperature even by closing the intake throttle 24, the pressure of the exhaust gas is increased by simultaneously closing the intake throttle 24 and the exhaust throttle 26, so that the temperature of the exhaust gas can be ensured by increasing the amount of the exhaust gas returning to the cylinder. Also, the PM in the exhaust gas can be continuously regenerated over a wide operating region.

Subsequently, when the accelerator pedal is further returned by about 2% of the depressing amount of the accelerator pedal in an operating condition at a rotation number of 1500 rpm, the depressing amount of the accelerator pedal becomes less than the prescribed first threshold value a1. In this state, the changeover valve control means issues a control signal to the changeover valve 34 referring to the opening data of the changeover valve, so that the bypass passage 33 is open by again tilting the valve 34 to the position 34b.

The operating conditions of the aforementioned depressing amount of the accelerator pedal work out in an idling state or decelerating state of the engine or a state of descending a long incline. In such an extra-low load condition, the exhaust gas is extremely low in temperature, a large amount of the exhaust gas flows into the bypass passage 33 to decrease the flow of the exhaust gas into the micro DPF 32, so that reduction in temperature of the micro DPF 32 can be prevented. Besides, the heat insulating layer 37 is interposed between the bypass passage 33 and the micro DPF 32, so that the micro DPF 32 caused by the exhaust gas passing through the bypass passage 33 can be prevented from cooling. Thus, the purification performance can be maintained by returning the accelerator pedal until a driving condition is required for the micro DPF 32. In this operating condition, purification treatment in the DPF is not needed because the PM and NOx are minuscule. Meanwhile, since the position 34b of the changeover valve 34 is applied in both a middle-high load state and an extra-low load state, it is preferable to determine the position so as to maintain the temperature of the micro DPF 32 in the middle-high load state and restrain reduction in temperature of the micro DPF. To be specific, it is preferable to determine the position of the changeover valve 34 so as to allow 70 to 98 vol% of the entire amount of exhaust gas to flow into the bypass passage 33. More preferably, it should be determined so as to allow 85 to 90 vol% of the entire amount of exhaust gas to flow into the bypass passage 33.

The changeover valve control means is preferably operated to control the changeover valve 34 so as to maintain its changed state for a prescribed time after switching the changeover valve 34. By maintaining the changed state for a prescribed time after changing the changeover valve 34, the changeover valve 34 can be sensitively responsive to the depressing amount of the accelerator pedal and the rotation number of the engine. It is desirable to determine the time for maintaining the changed state to 1 to 5 seconds, more preferably 2 to 3 seconds.

The changeover valve control means in the control device 20 may derive control information for controlling the changeover valve 34 on the basis of the temperature of the exhaust gas obtained from the exhaust temperature sensors 28 and 29 for measuring the temperature of the exhaust gas flowing into the micro DPF 32 or main DPF 60, so as to control the temperature of the exhaust gas within a prescribed temperature range. In this instance, the changeover valve control means may execute processing of putting off the opening data of the changeover valve 34 according to the temperature of the exhaust gas or perform an arithmetic calculation of adding a prescribed coefficient to the control information from the changeover valve 34 or multiplying the control information by the prescribed coefficient.

The intake temperature sensor 22 for measuring the intake-air temperature of the engine may be disposed on the intake manifold 12, so that the changeover valve control means derives the control information for controlling the changeover valve 34 on the basis of the intake temperature detected by the intake temperature sensor 22 in addition to the opening data of the changeover valve 34. In this instance, the changeover valve control means may execute processing of putting off the opening data of the changeover valve according to the intake temperature or perform an arithmetic calculation of adding a prescribed coefficient to the control information to be outputted to the changeover valve 34 or multiplying the control information by the prescribed coefficient.

Thus, by controlling the exhaust temperature or the intake temperature by the changeover valve control means, the prescribed temperature of the exhaust gas can be maintained even when the temperature of the exhaust gas changes beyond stable use conditions.

Meanwhile, although it becomes customary to make the exhaust pipe of dimensions capable of enhancing exhaust efficiency by using exhaust pulsation when congregating multicylinder exhaust ducts, there occurs a problem that deterioration of exhaust efficiency is caused due to increase in pumping loss as the result of placing the micro DPF 32 close to the exhaust port to ensure the temperature of the exhaust gas flowing into the main DPF 60 above the prescribed temperature. Therefore, the main DPF 60 is preferably used within the operating region at a high temperature of the exhaust gas flowing into the main DPF 60.

According to the control method for the exhaust gas purification device for the diesel engine in Embodiment (1) described above, cooling of the micro DPF can be restrained when the temperature of the exhaust gas is extremely low in an idling state or decelerating state of the engine or a state of descending a long incline, so that the purification performance can be maintained until a driving condition is required for the micro DPF 32.

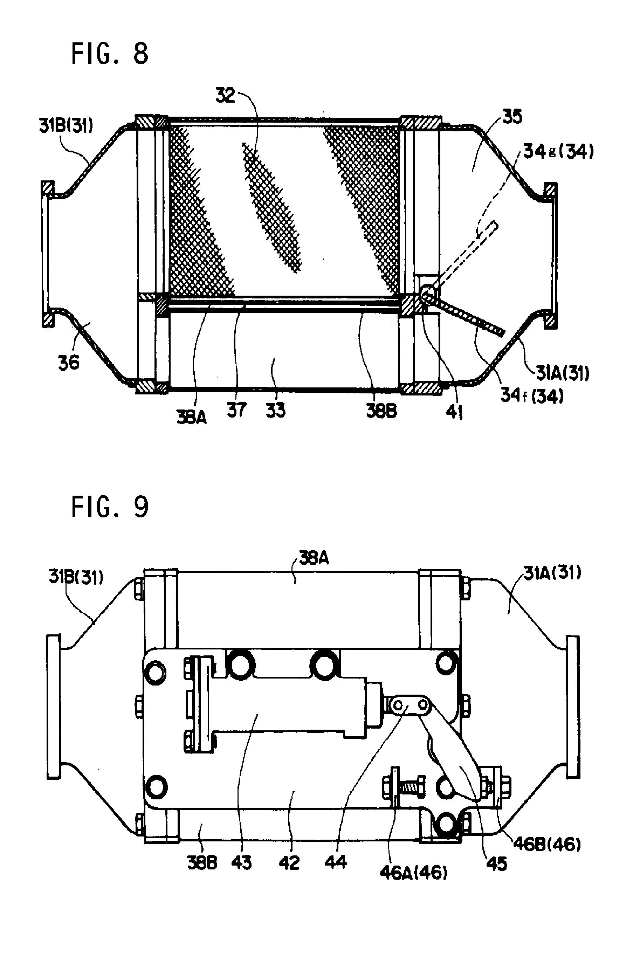

Next, the exhaust gas purification device for the diesel engine in Embodiment (2) of the invention will be described hereinafter with reference to FIGS. 8 through 10.

The exhaust gas purification device of Embodiment (2) is made by modifying the exhaust gas purification device of Embodiment (1) as shown in FIG 8, so as to change the changeover valve 34 to the position 34g for introducing a large amount of exhaust gas into the bypass passage 33 and a small amount of exhaust gas into the micro DPF 32 in one phase or the position 34f for closing the micro DPF 32 to introduce the total amount of exhaust gas into the bypass passage 33 in another phase.

When the changeover valve 34 assumes the position 34f, the micro DPF is open so as to allow a large amount of exhaust gas to flow thereinto and the bypass passage 33 is also open so as to allow a part of the exhaust gas to flow thereinto. In this state, the large amount of exhaust gas flows into the micro DPF 32, to transform CO, HC and NO contained in the exhaust gas to CO₂, H₂O and NO₂ and subject the PM in the exhaust gas to continuous oxidation treatment. Then, the exhaust gas passing through the micro DPF is fed into the downstream exhaust pipe 11B through the exhaust outlet port 36. A part of exhaust gas passes through the bypass passage and is treated in the main DPF on the downstream side.

When the changeover valve 34 assumes the position 34g in FIG 8, the bypass passage 33 is open, and a passage for allowing a part of the exhaust gas to flow into the micro DPF 32 is formed as well. In this state, a gas-passing resistance for restricting flow of the exhaust gas in the micro DPF 32 is larger than that in the bypass passage 33, thus to allow a large amount of exhaust gas to pass through the bypass passage 33. At a time, a part of the exhaust gas also flows into the micro DPF 32 to subject a part of the PM in the exhaust gas to continuous oxidation treatment. The exhaust gas passing through the micro DPF 32 and the bypass passage 33 is fed into the downstream exhaust pipe 11B through the exhaust outlet port 36.

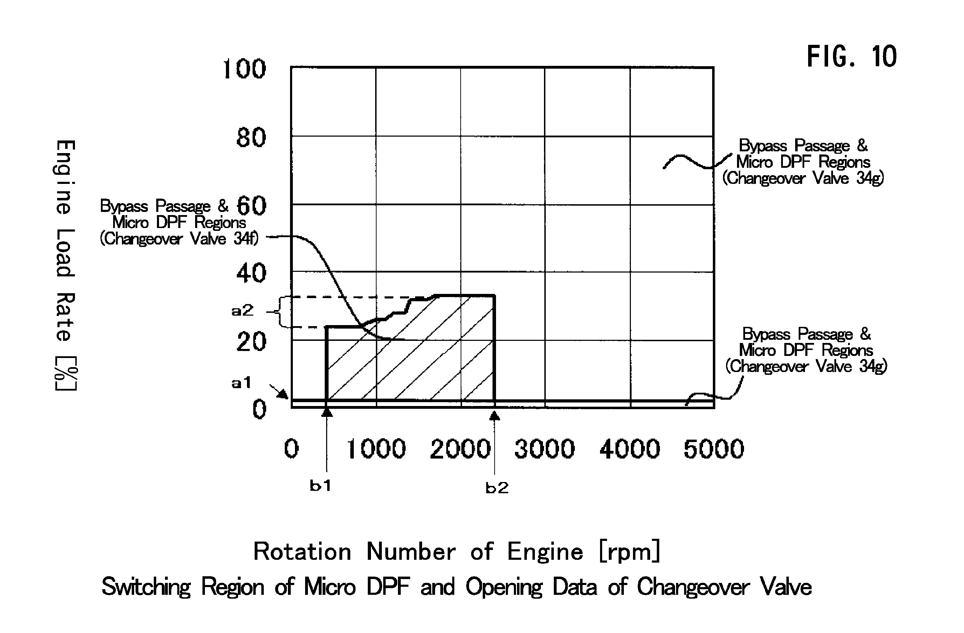

Next, switching of the changeover valve 34 in Embodiment (2) of the invention will be described hereinafter. Similarly in Embodiment (1) described above, the changeover valve 34 is operated by an air cylinder 43 attached to the housing 31 through the mount plate 42 as illustrated in FIG 9. The changeover valve 34 is restricted in its tilting movement at the position 34f by the stopper 46A. That is, when the changeover valve 34 arrives at the stopper 46A by expanding the piston of the air cylinder 43, the changeover valve 34 is positioned at 34f to allow the large amount of exhaust gas to flow into the micro DPF 32 and the small amount of exhaust gas to flow into the bypass passage 33.

FIG 10 shows the opening data for controlling the changeover valve 34 used in the exhaust gas purification devices shown in FIG 8 according to the depressing amount of the accelerator pedal (engine load rate).

The opening data for the changeover valve 34 shown in FIG 10 are stored in the memory means incorporated in the control device 20 similarly to that in Embodiment (1) described above. The control device 20 is equivalent to that in Embodiment (1) described above.

As seen from the opening data shown in FIG 10, when the depressing amount of the accelerator pedal (engine load rate) is less than a predetermined first threshold value a1, the changeover valve control means in the control device 20 issues a control signal to the changeover valve 34 to tilt the changeover valve 34 to the position 34g. Consequently, the bypass passage 33 is open to introduce a large amount of exhaust gas into the bypass passage 33 and a part of exhaust gas into the micro DPF.

When the depressing amount of the accelerator pedal is more than a first threshold a1 and less than a second threshold value a2 and the rotation number of the engine is more than a first threshold value b1 and less than a second threshold value b2, the changeover valve control means in the control device 20 outputs a control signal to the changeover valve 34 to tilt the changeover valve to the position 34f. Consequently, the exhaust gas flowing into the bypass passage 33 is reduced, consequently to allow a large amount of exhaust gas to flow into the micro DPF 32, and a part of exhaust gas flows through the bypass passage 33. The first threshold value a1 and the second threshold value a2 predetermined for the depressing amount of the accelerator pedal have the relation of (second threshold value a2 ≧ first threshold value a1). Likewise, the first threshold value a1 and the second threshold value a2 predetermined for the rotation number of the engine have the relation of (second threshold value b2 ≧ first threshold value b1). The second threshold value a2 predetermined for the depressing amount of the accelerator pedal varies with the rotation number of the engine, so that the second threshold value a2 increases as the rotation number of the engine increases, as shown in FIG 7.

Meanwhile, when the depressing amount of the accelerator pedal is larger than a prescribed second threshold value a2 or the rotation number of the engine is larger than a prescribed second threshold value b2, the changeover valve control means in the control device 20 issues a control signal to the changeover valve 34 to tilt the changeover valve 34 to the position 34b. Consequently, the bypass passage 33 is open to introduce a large amount of exhaust gas into the bypass passage 33 and a part of exhaust gas into the micro DPF.

To be more specific, in operating condition at a middle rotation speed of 1500 rpm and middle load with 60% depressing amount of the accelerator pedal as one example, the depressing amount of the accelerator pedal becomes larger than the second threshold value a2. In the operating condition at the middle rotation speed and middle load, the temperature of the exhaust gas is increased to be sufficiently purified in the main DPF 60. Thus, the changeover valve control means in the control device 20 issues a control signal to the changeover valve 34 to tilt the changeover valve 34 to the position 34g. Then, the changeover valve 34 assumes the position 34g, thus to allow the large amount of exhaust gas to flow into the bypass passage 33 and the small amount of exhaust gas to flow into the micro DPF 32.

Thus, by allowing a small amount of the exhaust gas to flow continuously into the micro DPF 32 in using the main DPF 60, the micro DPF 32 can be maintained at a prescribed temperature. Therefore, if the flow of the exhaust gas changes into the micro DPF 32 due to decrease in load in an operation condition, the PM in the exhaust gas can be subjected to continuous oxidation treatment just after changing the flow, so that the PM can be continuously regenerated even when the operation condition changes abruptly. It is desirable to determine the position 34g of the changeover valve 34 to a position at which 70 to 98 vol%, more preferably 85 to 90 vol%, of the entire amount of exhaust gas flows through the bypass passage.

Subsequently, when the accelerator pedal is further returned by about 20% of the depressing amount while operating the engine at a rotation number of 1500 rpm, the depressing amount of the accelerator pedal becomes more than the first threshold value a1 and less than the second threshold value a2 and the rotation number of the engine becomes more than the first threshold value b1 and less than the second threshold value b2. In this state, the changeover valve control means issues a control signal to the changeover valve 34 so as to tilt the valve 34 to the position 34f, referring to the opening data of the changeover valve, thus to allow the large amount of exhaust gas to flow into the micro DPF 32 and the small amount of exhaust gas to flow into the bypass passage 33.

The operating conditions of the aforementioned rotation number of the engine and the depressing amount of the accelerator pedal work out at a constant speed. Under these conditions, the entire exhaust gas flows into the micro DPF 32 to subject a part of PM in the exhaust gas to continuous oxidation treatment. Since the passage of the exhaust gas is switched so as to introduce the large amount of exhaust gas into the micro DPF, the flow resistance of the exhaust gas is increased to make the pressure of the exhaust gas higher that in the exhaust gas flowing through the bypass passage 33. Thus, the exhaust gas flowing back to the diesel engine 10 is increased in quantity to increase the temperature of the exhaust gas, so that the exhaust gas flowing into the micro DPF 32 becomes a temperature capable of continuously regenerating the PM. It is desirable to determine the position 34f of the changeover valve 34 to a position at which 2 to 30 vol%, more preferably 10 to 15 vol%, of the entire amount of exhaust gas flows through the bypass passage.

Subsequently, when the accelerator pedal is further returned by about 2% of the depressing amount of the accelerator pedal in an operating condition at a rotation number of 1500 rpm, the depressing amount of the accelerator pedal becomes less than the prescribed first threshold value a1. In this state, the changeover valve control means issues a control signal to the changeover valve 34 referring to the opening data of the changeover valve, so that the large amount of exhaust gas flows into the bypass passage 33 by again tilting the valve 34 to the position 34g.

The operating conditions of the aforementioned rotation number of the engine and the depressing amount of the accelerator pedal work out in an idling state or decelerating state of the engine or a state of descending a long incline. In this state, although the temperature of the exhaust gas is extremely low, reduction in temperature of the micro DPF 32 can be prevented by decreasing the exhaust gas flowing into the micro DPF 32 to a small amount. Besides, the heat insulating layer 37 is interposed between the bypass passage 33 and the micro DPF 32, so that the micro DPF 32 caused by the exhaust gas passing through the bypass passage 33 can be prevented from cooling. As a result, when the temperature of the exhaust gas is extremely low in an idling state or decelerating state of the engine or a state of descending a long incline, cooling of the micro DPF can be restrained perfectly. Therefore, the purification performance can be maintained by returning the accelerator pedal until a driving condition is required for the micro DPF 32. In this operating condition, purification treatment in the DPF is not needed because the PM and NOx are minuscule.

The exhaust gas purification device of Embodiment (2) according to the invention brings about the same effects as in Embodiment (1) of decreasing the flow resistance of the exhaust gas and restraining radical increase in pressure and temperature of the exhaust gas discharged from the engine.

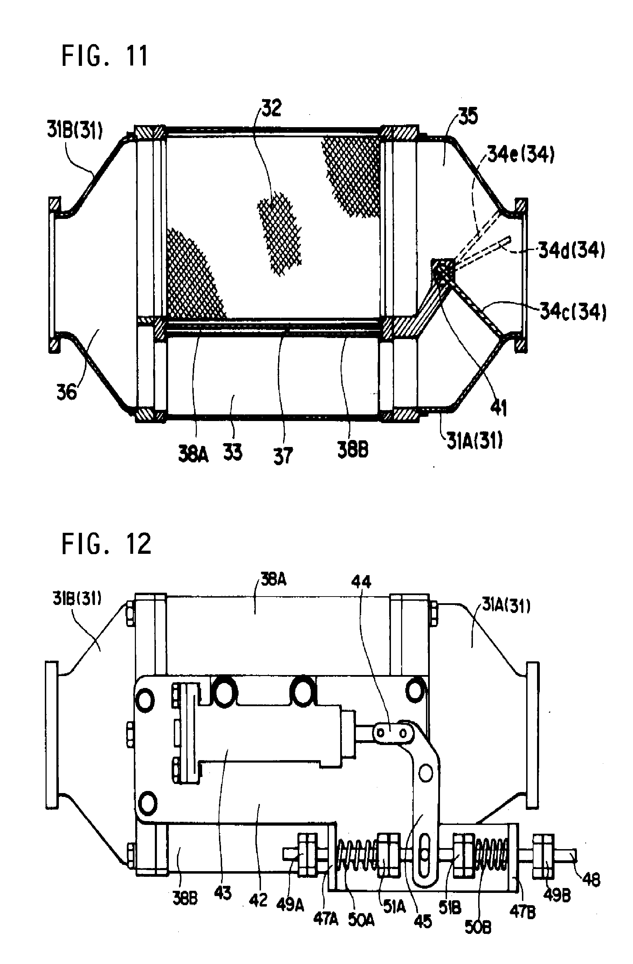

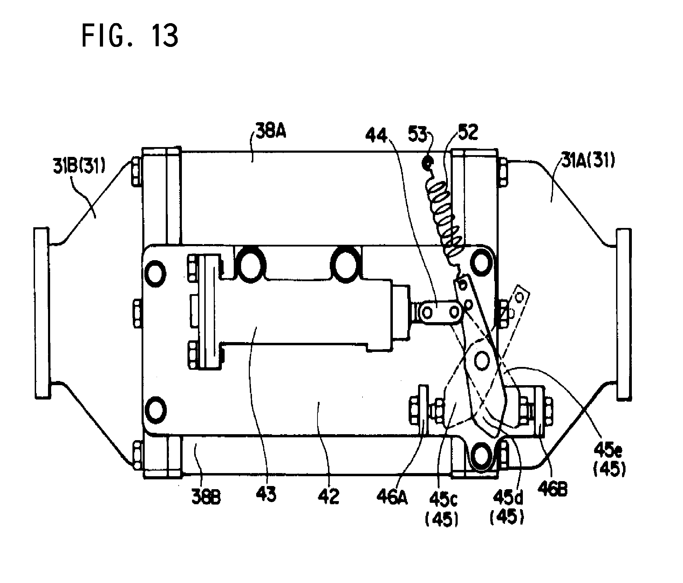

Next, the exhaust gas purification device for the diesel engine in Embodiment (3) of the invention will be described hereinafter with reference to FIGS. 11 through 14.

The exhaust gas purification device of Embodiment (3) is made by modifying the exhaust gas purification device of Embodiment (1) as shown in FIG 11, so as to change the changeover valve 34 in three phases at the position 34c for closing the bypass passage 33 to introducing the entire exhaust gas into the micro DPF 32, the position 34d for introducing a large amount of exhaust gas into the bypass passage 33 and a small amount of exhaust gas into the micro DPF 32, or the position 34e for closing the micro DPF 32 to introduce the total amount of exhaust gas into the bypass passage 33.

When the changeover valve 34 assumes the position 34c, the bypass passage 33 is closed. In this state, the entire exhaust gas flows into the micro DPF 32 to subject a part of the PM in the exhaust gas to continuous oxidation treatment. Then, the exhaust gas passing through the micro DPF 32 is fed into the downstream exhaust pipe 11B through the exhaust outlet port 36.

When the changeover valve 34 assumes the position 34d in FIG 11, the bypass passage 33 is open, and a passage for allowing a part of the exhaust gas to flow into the micro DPF 32 is formed as well. In this state, a gas-passing resistance for restricting flow of the exhaust gas in the micro DPF 32 is larger than that in the bypass passage 33, thus to allow a large amount of exhaust gas to pass through the bypass passage 33. At a time, a part of the exhaust gas also flows into the micro DPF 32 to subject a part of the PM in the exhaust gas to continuous oxidation treatment. The exhaust gas passing through the micro DPF 32 and the bypass passage 33 is fed into the downstream exhaust pipe 11B through the exhaust outlet port 36.

In the state of the changeover valve 34 at the position 34e as shown in FIG 11, the micro DPF 32 is totally closed, thus to introduce the entire exhaust gas into the bypass passage 33.

Next, switching of the changeover valve 34 in Embodiment (3) will be described. Similarly to Embodiment (1) described above, the changeover valve 34 is operated with the air cylinder 43 mounted on the side of the housing 31 through the mount plate 42 as shown in FIG 12.

The mount plate 42 is provided with fixing plates 47A and 47B having holes. Through the holes in the fixing plates 47A and 47B, a shaft 48 is inserted slidably. At both ends of the shaft 48, stoppers 49A and 49B are fixed to restrict movement of the shaft 48. To the shaft 48 between the fixing plates 47A and 47B, there are attached, springs 50A and 50B for regulating the tilting of the lever link 45 and fixing nuts 51A and 51B for restricting elongation of the springs 50A and 50B, which serve as position adjusting means for restricting the tilting of the lever link 45 by the action of elasticity of each spring 50A and 50B. As the position adjusting means, there may be used various elastic members such as of rubber instead of the spring.

As one example, when the piston of the air cylinder 43 expands, the lever link 45 tilts until bringing the stopper 49B into contact with the fixing plate 47B. At this time, the changeover valve 34 is at the position 34c, thus to close the bypass passage 33. When the air cylinder 43 is not applied with pressure, the lever link 45 tilts until the springs 50A and 50B are balanced resiliently. In this state, the changeover valve 34 assumes the position 34d to open the bypass passage 33 and allow the small amount of exhaust gas to flow into the micro DPF 32. When the air cylinder 43 becomes short, the lever link 45 tilts until bringing the stopper 49A into collision with the fixing plate 47A. At this time, the changeover valve 34 is at the position 34e, thus to close the micro DPF 32.

FIG 16 illustrates a modified switching means for the changeover valve 34. The switching operation of the changeover valve 34 is carried out by using the air cylinder 43 similarly to the foregoing embodiments. As the position adjusting means for controlling the tilting of the lever link 45, a spring 52 has one end attached to one end of the lever link 45. The other end of the spring 52 is fixed by a fixture 53.

When the piston of the air cylinder 43 expands, the lever link 45 tilts to expand the spring 52, consequently to tilt to the position of the stopper 46A. At this time, in a case where the air cylinder 43 is not applied with pressure, the lever link 45 is retained at the intermediate position by the action of elasticity of the spring 52. In this state, the changeover valve 34 is at the position 34d to open the bypass passage 33 and allow a small amount of exhaust gas to flow into the micro DPF 32. When the air cylinder 43 is shortened, the lever link 45 tilts until coming into collision with the stopper 49B. At this time, the changeover valve 34 is at the position 34e, thus to close the micro DPF 32.

In this embodiment, the air cylinder may be a multistage air cylinder capable of switching air pressure supplied thereto to vary the opening of the changeover valve 32.

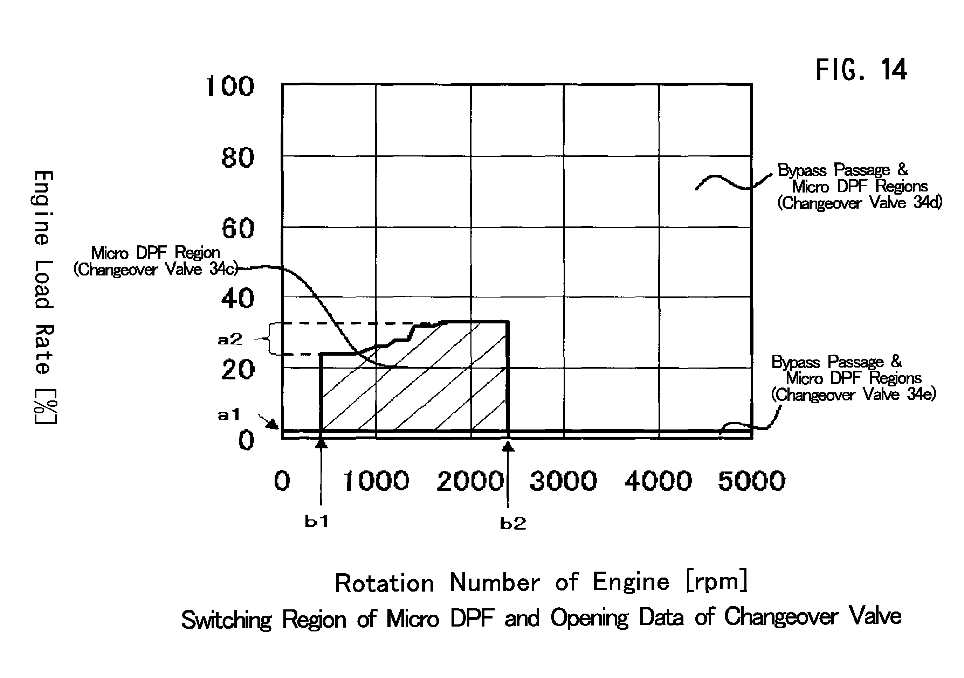

FIG 14 is a graph showing opening data on the depressing amount of the accelerator pedal (engine load rate) corresponding to the opening of the changeover valve 34 used in the exhaust gas purification device shown in FIG 11 according to the number of rotations of the engine.

The opening data shown in FIG 14 are stored in a memory provided in the control device 20, similarly to that in Embodiment (1) described above. The control device 20 is equivalent to that in Embodiment (1).

As shown in FIG 14, in operating condition at a middle rotation speed of 1500 rpm and middle load with 60% depressing amount of the accelerator pedal as one example, the depressing amount of the accelerator pedal becomes larger than the second threshold value a2. In this state, the temperature of the exhaust gas is increased to be sufficiently purified in the main DPF 60. Thus, the changeover valve control means in the control device 20 issues a control signal to the changeover valve 34 to tilt the changeover valve 34 to the position 34d, so that the bypass passage 33 is open to allow the exhaust gas to flow directly into the main DPF 60.

The changeover valve 34 in this embodiment is composed so as to allow the small amount of exhaust gas into the micro DPF 32, but not the entire exhaust gas into the main DPF 60, when the bypass passage is open to introduce the exhaust gas directly into the main DPF 60. By continuously introducing the small amount of exhaust gas into the micro DPF 32 in using the main DPF 60, the micro DPF 32 can be maintained at a prescribed temperature. Therefore, if the flow of the exhaust gas changes into the micro DPF 32 due to decrease in load in an operation condition, the PM in the exhaust gas can be subjected to continuous oxidation treatment just after changing the flow, so that the PM can be continuously regenerated even when the operation condition changes abruptly. It is preferable to determine the position of the changeover valve 34 so as to allow 70 to 98 vol% of the entire amount of exhaust gas to flow into the bypass passage 33. More preferably, it should be determined so as to allow 85 to 90 vol% of the entire amount of exhaust gas to flow into the bypass passage 33.

Subsequently, when the accelerator pedal is further returned by about 20% of the depressing amount while operating the engine at a rotation number of 1500 rpm, the depressing amount of the accelerator pedal becomes more than the first threshold value a1 and less than the second threshold value a2 and the rotation number of the engine becomes more than the first threshold value b1 and less than the second threshold value b2. In this state, the changeover valve control means issues a control signal to the changeover valve 34, so that the bypass passage 33 is closed by tilting the valve 34 to the position 34c thus to allow the entire exhaust gas to flow into the micro DPF 32 while referring to the opening data of the changeover valve.

The operating conditions of the aforementioned rotation number of the engine and the depressing amount of the accelerator pedal work out at a constant speed. Under these conditions, the entire exhaust gas flows into the micro DPF 32 to subject a part of PM in the exhaust gas to continuous oxidation treatment. Since the passage of the exhaust gas is switched to the micro DPF 32 by closing the bypass passage 33 with the changeover valve 34, the flow resistance of the exhaust gas is increased to make the pressure of the exhaust gas higher that in the exhaust gas flowing through the bypass passage 33. Thus, the exhaust gas flowing back to the diesel engine 10 is increased in quantity to increase the temperature of the exhaust gas, so that the exhaust gas flowing into the micro DPF 32 becomes a temperature capable of continuously regenerating the PM.

Subsequently, when the accelerator pedal is further returned by about 2% of the depressing amount of the accelerator pedal in an operating condition at a rotation number of 1500 rpm, the depressing amount of the accelerator pedal becomes less than the prescribed first threshold value a1. In this state, the changeover valve control means issues a control signal to the changeover valve 34 referring to the opening data of the changeover valve, so that the micro DPF 32 is closed and the bypass passage is open by tilting the valve 34 to the position 34e.

The operating conditions of the aforementioned rotation number of the engine and the depressing amount of the accelerator pedal work out in an idling state or decelerating state of the engine or a state of descending a long incline. In this state, although the temperature of the exhaust gas is extremely low, reduction in temperature of the micro DPF 32 can be prevented by decreasing the exhaust gas flowing into the micro DPF 32 to a small amount. Besides, the heat insulating layer 37 is interposed between the bypass passage 33 and the micro DPF 32, so that the micro DPF 32 caused by the exhaust gas passing through the bypass passage 33 can be prevented from cooling. As a result, when the temperature of the exhaust gas is extremely low in an idling state or decelerating state of the engine or a state of descending a long incline, cooling of the micro DPF can be restrained perfectly. Therefore, the purification performance can be maintained by returning the accelerator pedal until a driving condition is required for the micro DPF 32. In this operating condition, purification treatment in the DPF is not needed because the PM and NOx are minuscule.

The exhaust gas purification device of Embodiment (3) according to the invention brings about the same effects as in Embodiment (1) of perfectly preventing the exhaust gas from flowing into the micro DPF 32 when the temperature of the exhaust gas is extremely low in an idling state or decelerating state of the engine or a state of descending a long incline, consequently to restrain cooling of the micro DPF successfully. Therefore, the purification performance can be maintained by returning the accelerator pedal until a driving condition is required for the micro DPF 32.

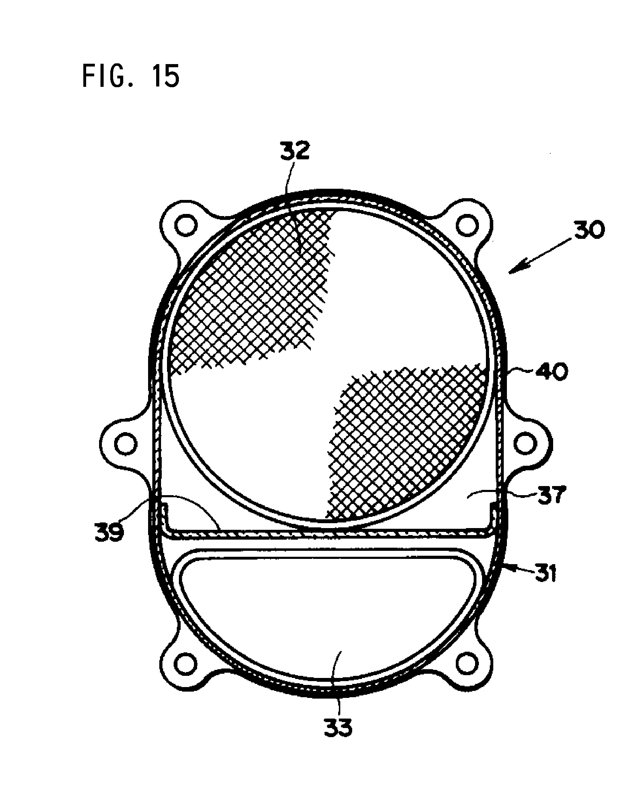

Next, Embodiment (4) of the invention will be described with reference to FIG 15.

In Embodiment (4), the micro DPF unit 30 formed in a cylinder is disposed on one end inside of a cylindrical casing 40 having a substantially semi-ellipsoid section. A separator 39 is disposed close to the micro DPF 32, and the bypass passage 33 is formed on the other end inside the casing 40. Between the micro DPF 32 and the bypass passage 33, the heat insulating layer 37 is disposed for restraining heat conduction,

Although the micro DPF 32 and the separator 39 defining the bypass passage 33 are in partial contact with each other in this embodiment, the micro DPF 32 is covered at its nearly whole surface opposite to the bypass passage 33 with a heat insulating layer 37, so that heat conduction between the bypass passage and the micro DPF can be restrained.

The exhaust gas purification device of Embodiment (4) according to the invention brings about the same effects as in Embodiment (1) and has a function of completely shielding the micro DPF 32 from heat from the bypass passage 33 by means of the heat insulating layer 37 disposed between the bypass passage and the micro DPF, so that the micro DPF can be prevented from cooling when the temperature of the exhaust gas flowing through the bypass passage 33 is extremely low.

In Embodiments (1) to (4) described above, the heat conduction between the bypass passage 33 and the micro DPF 32 can be restrained by the heat insulating layer 37 disposed between the bypass passage 33 and the micro DPF 32, but, as an alternative, a casing of micro DPF 32 or the bypass passage 33 may be provided with a heat insulation material in place of the heat insulating layer 37 between the bypass passage 33 and the micro DPF 32.

### [INDUSTRIAL APPLICABILITY]

The exhaust gas purification device for a diesel engine of the present invention can decrease emissions of particulate matter (PM) discharged from the diesel engine for automobiles such as a truck.

## Claims

1. An exhaust gas purification device for a diesel engine, comprising:
a micro DPF for collecting and treating particulate matter in exhaust gas discharged from a diesel engine,
a bypass passage juxtaposed to said micro DPF,
a heat insulating layer disposed between said bypass passage and said micro DPF for restraining heat conduction between the exhaust gas flowing said bypass passage and said micro DPF, and
a changeover valve for allowing the exhaust gas to flow selectively into at least one of said micro DPF and said bypass passage.

2. The exhaust gas purification device for the diesel engine claimed in claim 1, wherein said micro DPF, bypass passage and changeover valve are integrated into one by a housing.

3. The exhaust gas purification device for the diesel engine claimed in claim 1 or claim 2, wherein an exhaust pipe connecting said micro DPF with the diesel engine is covered with heat insulation material.

4. The exhaust gas purification device for the diesel engine claimed in claim 1 or claim 2, wherein said main DPF is placed on the downstream side of said micro DPF.

5. The exhaust gas purification device for the diesel engine claimed in claim 3, wherein said main DPF is placed on the downstream side of said micro DPF.

6. The exhaust gas purification device for the diesel engine claimed in claim 4, wherein said micro DPF is placed closer to said main DPF than the diesel engine.

7. The exhaust gas purification device for the diesel engine claimed in claim 5, wherein said micro DPF is placed closer to said main DPF than the diesel engine.

8. The exhaust gas purification device for the diesel engine claimed in claim 4, wherein said micro DPF is arranged to place the central axis of an exhaust outlet port of said micro DPF in the same line with the central axis of a flow passage of said main DPF.

9. The exhaust gas purification device for the diesel engine claimed in claim 5, wherein said micro DPF is arranged to place the central axis of an exhaust outlet port of said micro DPF in the same line with the central axis of a flow passage of said main DPF.

10. The exhaust gas purification device for the diesel engine claimed in claim 6, wherein said micro DPF is arranged to place the central axis of an exhaust outlet port of said micro DPF in the same line with the central axis of a flow passage of said main DPF.

11. The exhaust gas purification device for the diesel engine claimed in claim 7, wherein said micro DPF is arranged to place the central axis of an exhaust outlet port of said micro DPF in the same line with the central axis of a flow passage of said main DPF.

12. The exhaust gas purification device for the diesel engine claimed in claim 1 or claim 2, further comprising a memory means for storing opening data used for controlling opening of said changeover valve according to an depressing amount of an accelerator pedal and a rotation number of the engine, said changeover valve control means detecting the depressing amount of the accelerator pedal and being controlled to allow the entire exhaust gas or large amount of exhaust gas to pass through said bypass passage when said depressing amount of said accelerator pedal is less than a first threshold value prescribed on the basis of said opening data.

13. The exhaust gas purification device for the diesel engine claimed in claim 12, wherein said changeover valve control means detects said depressing amount of said accelerator pedal and said rotation number of the engine and is controlled to allow the entire exhaust gas or large amount of exhaust gas to pass through said micro DPF when said depressing amount of the accelerator pedal is more than a first threshold and less than a second threshold value, which threshold values are prescribed on the basis of said opening data, and said rotation number of the engine prescribed on the basis of said depressing amount of the accelerator pedal is more than said first threshold value and less than said second threshold value.

14. The exhaust gas purification device for the diesel engine claimed in claim 12, wherein said changeover valve control means detects said depressing amount of the accelerator pedal and said rotation number of the engine and is controlled to allow said large amount of exhaust gas to pass through said bypass passage when said rotation number of the engine is more than said second threshold value prescribed on the basis of said opening data or said depressing amount of the accelerator pedal is more than said second threshold value prescribed on the basis of said opening data.

15. The exhaust gas purification device for the diesel engine claimed in claim 13, wherein said changeover valve control means detects said depressing amount of the accelerator pedal and said rotation number of the engine and is controlled to allow said large amount of exhaust gas to pass through said bypass passage when said rotation number of the engine is more than said second threshold value prescribed on the basis of said depressing amount of the accelerator pedal or said depressing amount of the accelerator pedal is more than said second threshold value prescribed on the basis of said depressing amount of the accelerator pedal.

16. The exhaust gas purification device for the diesel engine claimed in claim 12, further comprising an exhaust temperature sensor for measuring the temperature of the exhaust gas fed into said micro DPF or main DPF, said changeover valve control means outputting information for controlling said changeover valve on the basis of the temperature of the exhaust gas detected by said exhaust temperature sensor.

17. The exhaust gas purification device for the diesel engine claimed in claim 13, further comprising an exhaust temperature sensor for measuring the temperature of the exhaust gas fed into said micro DPF or main DPF, said changeover valve control means outputting information for controlling said changeover valve on the basis of the temperature of the exhaust gas detected by said exhaust temperature sensor.

18. The exhaust gas purification device for the diesel engine claimed in claim 14, further comprising an exhaust temperature sensor for measuring the temperature of the exhaust gas fed into said micro DPF or main DPF, said changeover valve control means outputting information for controlling said changeover valve on the basis of the temperature of the exhaust gas detected by said exhaust temperature sensor.

19. The exhaust gas purification device for the diesel engine claimed in claim 15, further comprising an exhaust temperature sensor for measuring the temperature of the exhaust gas fed into said micro DPF or main DPF, said changeover valve control means outputting information for controlling said changeover valve on the basis of the temperature of the exhaust gas detected by said exhaust temperature sensor.

20. A control device for use in an exhaust gas purification device for a diesel engine, including a main DPF for collecting and treating particulate matter in an exhaust gas discharged from a diesel engine, a micro DPF disposed on the upperstream side of said main DPF, a bypass passage juxtaposed to said micro DPF, and a changeover valve for allowing the exhaust gas to flow selectively into at least one of said micro DPF and said bypass passage, and further comprising:
a memory means for storing opening data used for controlling opening of said changeover valve according to an depressing amount of an accelerator pedal and a rotation number of the engine, and
a changeover valve control means detects the depressing amount of the accelerator pedal and is controlled to allow the entire amount or large amount of exhaust gas to pass through a bypass passage when the depressing amount of the accelerator pedal is less than a first threshold value prescribed on the basis of said opening data.

21. The control device claimed in claim 20, wherein said changeover valve control means detects said depressing amount of the accelerator pedal and rotation number of the engine and is controlled to allow the entire amount or large amount of exhaust gas to pass through said micro DPF when said depressing amount of the accelerator pedal is more than a first threshold and less than a second threshold value, which threshold values are prescribed on the basis of said opening data, and said rotation number of the engine prescribed on the basis of said opening data is more than said first threshold value and less than said second threshold value.

22. The control device claimed in claim 20 or claim 21, wherein said changeover valve control means detects said depressing amount of the accelerator pedal and said rotation number of the engine and is controlled to allow the large amount of exhaust gas to pass through said bypass passage when said rotation number of the engine is more than said second threshold value prescribed on the basis of said opening data or said depressing amount of the accelerator pedal is more than said second threshold value prescribed on the basis of said opening data.
